# EUROPÄISCHE PATENTSCHRIFT

(11) **EP 0 953 786 B1**
(45) Veröffentlichungstag und Bekanntmachung des Hinweises auf die Patenterteilung: **25.07.2007**
(21) Anmeldenummer: 98121977.7
(22) Anmeldetag: 19.11.1998
(51) Int. Cl.: F16D 59/02, F16D 55/28, B66D 5/14

(54) **Elektromagnetische Federdruckbremse**
Electromagnetic spring brake
Frein à ressort électromagnétique

(30) Priorität: 29.04.1998 DE 19819141
(43) Veröffentlichungstag der Anmeldung: 03.11.1999
(73) Patentinhaber: Stromag Aktiengesellschaft, 59425 Unna (DE)
(72) Erfinder: Dietrich, Michael, 44879 Bochum (DE)
(74) Vertreter: Patentanwälte Ruff, Wilhelm, Beier, Dauster & Partner

(56) Entgegenhaltungen:
- DE-A- 3 424 595
- DE-U- 8 519 223
- DE-U- 8 701 790
- DE-U- 29 510 168

## Beschreibung

Die Erfindung betrifft eine elektromagnetische Federdruckbremse mit einer drehbaren Bremsscheibenanordnung sowie mit einer der Bremsscheibe axial zugeordneten Ankerscheibenanordnung, die in einer Axialrichtung für einen Kraftschluß mit der Bremsscheibenanordnung durch eine Druckfederanordnung und in der entgegengesetzten Axialrichtung durch eine elektromagnetische Spule beaufschlagbar ist. Eine derartige Bremseinrichtung ist aus der DE-U-85 19 223 bekannt.

Aus der DE 36 08 586 A1 ist eine elektromagnetische Federdruckbremse bekannt, bei der eine einteilige Ankerscheibe durch eine Druckfederanordnung gegen einen Bremsflansch gedrückt wird. Zur Lüftung wird die Ankerscheibe entgegen der Federkraft der Druckfederanordnung durch die Strombeaufschlagung einer elektromagnetischen Spule gegen einen Spulenkörper gezogen. Zusätzlich ist der Ankerscheibe eine Handlüftungseinrichtung zugeordnet, die eine manuelle Lüftung der Ankerscheibe ermöglicht.

Die DE 295 10 168 U1 offenbart ein Federdruck-Zweikreisbremssystem, bei dem die Ankerscheibe in zwei konzentrisch zueinander angeordnete Scheibenringe aufgeteilt ist, wobei beide Scheibenringe axial verschiebbar angeordnet sind.

Es ist auch bekannt (DE 34 24 595 C2), eine elektromagnetisch lüftbare Federdruckbremse mit einer in Umfangsrichtung mehrfach geteilten Ankerscheibe zu versehen, wobei jedem Ankerscheibensegment ein eigener Elektromagnet zugeordnet ist. Je nach Beaufschlagung der einzelnen Elektromagneten ist es möglich, die Ankerscheibensegmente einzeln, gruppenweise oder gemeinsam sowie zeitgleich oder zeitlich hintereinander zu lüften.

Aufgabe der Erfindung ist es, eine elektromagnetische Federdruckbremse der eingangs genannten Art zu schaffen, durch die mit einfachen Mitteln zwei voneinander unabhängige Bremskreise geschaffen werden.

Diese Aufgabe wird dadurch gelöst, daß die Ankerscheibenanordnung in Umfangsrichtung in zwei in einer gemeinsamen Ebene angeordnete Ankerscheibenhälften unterteilt ist, die unabhängig voneinander axial geführt sind, und daß die Druckfederanordnung in zwei Druckfedereinheiten aufgeteilt ist, die jeweils gleiche Druckkräfte aufbringen und die jeweils einer Ankerscheibenhälfte zugeordnet sind. Da beide Ankerscheibenhälften durch eine einzelne, gemeinsame elektromagnetische Spule beaufschlagbar sind, ist eine gleichzeitige Lüftung beider Ankerscheibenhälften gewährleistet. Da die beiden Ankerscheibenhälften unabhängig voneinander geführt und unabhängig voneinander federbeaufschlagt sind, ermöglicht auch der Ausfall einer Ankerscheibenhälfte noch eine ausreichende Bremsfunktion durch die andere Ankerscheibenhälfte. Ein Ausfall einer Ankerscheibenhälfte könnte insbesondere durch eine Verklemmung dieser Ankerscheibenhälfte erfolgen. Die erfindungsgemäße Federdruckbremse erfüllt somit die Vorschriften für Personen- und Lastenaufzüge, da zum einen die elektromagnetische Federdruckbremse eine ausschließlich mechanische Verzögerung bewirkt und zum anderen auch bei Versagen eines Bauteils der Bremse, insbesondere einer Ankerscheibenhälfte, eine ausreichende Bremswirkung erhalten bleibt, um einen mit einer entsprechenden Nutzlast beladenen Fahrkorb zu verzögern. Die erfindungsgemäße Federdruckbremse benötigt lediglich einfache mechanische Mittel, um die gewünschte Funktion zu erzielen. Ein gegenseitiges Berühren der Ankerscheibenhälften ist durch die jeweils voneinander unabhängige Führung ausgeschlossen. Eine Verschmutzung des Spaltes zwischen den beiden Ankerscheibenhälften kann nicht auftreten, da der Spalt ohne magnetische Nachteile ausreichend groß gewählt werden kann. Die erfindungsgemäße Lösung eignet sich sowohl für Federdruckbremsen mit ein- oder mehrteiligen Bremsscheiben als auch für Federdruckbremsen mit einer Bremsscheibenanordnung in Form von Lamellenscheiben.

In Ausgestaltung der Erfindung ist die Druckfedereinheit bezüglich der zugeordneten Ankerscheibenhälfte derart angeordnet, daß ihr Druckschwerpunkt mit einem Flächenschwerpunkt der Ankerscheibenhälfte übereinstimmt. Durch diese Ausgestaltung ergibt sich eine gleichmäßige Verteilung der Flächenpressung auf der Bremsscheibe, wodurch eine gute Bremswirkung erzielt wird.

In weiterer Ausgestaltung der Erfindung ist die axiale Führung jeder Ankerscheibenhälfte durch jeweils zwei zueinander parallele Linearführungen gestaltet, deren gemeinsame geometrische Schnittlinie ihrer Führungsachsen den Flächenschwerpunkt der zugeordneten Ankerscheibenhälfte schneidet. Dadurch wird vorteilhaft ein Verkanten der Ankerscheibenhälften bei einer entsprechenden axialen Verschiebung verhindert.

In weiterer Ausgestaltung der Erfindung weist jede Druckfedereinheit eine Druckfederteileinheit auf, die durch ein Stellelement für eine Bremsmomenteinstellung der Bremsscheibe belastet ist, wobei die Druckfederteileinheit den identischen Druckschwerpunkt wie die gesamte Druckfedereinheit aufweist. Diese Ausgestaltung gewährleistet, daß das Bremsmoment der beiden Bremskreise immer gleich groß ist. Eine Einstellung des Bremsmomentes durch ein Verstellen des Stellelementes hat somit keinen Einfluß auf die Lage des Druckschwerpunktes der jeweiligen gesamten Druckfedereinheit.

In weiterer Ausgestaltung der Erfindung ist ein zu den Ankerscheibenhälften koaxial angeordneter Lüftring vorgesehen, der für eine gleichzeitige Lüftung der Ankerscheibenhälften mittels einer Handbetätigung axial beweglich ist. Durch diese Ausgestaltung wird lediglich ein einzelner, gemeinsamer Lüftring benötigt, der in einfacher Weise beide Ankerscheibenhälften gleichzeitig lüftet.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einem Schnitt eine Ausführungsform einer erfindungsgemäßen elektromagnetischen Federdruckbremse, wobei der Schnittverlauf der Schnittlinie I-I in Fig. 2 entspricht,
- Fig. 2: eine Ansicht der elektromagnetischen Federdruckbremse nach Fig. 1 in Richtung des Pfeiles II in Fig. 1,
- Fig. 3: in vergrößerter Darstellung zwei Ankerscheibenhälften der Federdruckbremse nach den Fig. 1 und 2 einschließlich einer zugeordneten und mit einem Reibbelag versehenen Bremsscheibe, die lediglich gestrichelt angedeutet ist,
- Fig. 4: in einer Frontansicht die beiden Ankerscheibenhälften nach Fig. 3,
- Fig. 5: einen Ausschnitt der beiden Ankerscheibenhälften nach Fig. 4 entlang der Schnittlinie V-V in Fig. 4,
- Fig. 6: eine Ansicht eines Spulenkörpers der elektromagnetischen Federdruckbremse nach Fig. 1,
- Fig. 7: einen Schnitt durch den Spulenkörper nach Fig. 6 entlang der Schnittlinie VII-VII in Fig. 6,
- Fig. 8: einen Ausschnitt des Spulenkörpers nach Fig. 6 entlang der Schnittlinie VIII-VIII in Fig. 6,
- Fig. 9: einen weiteren Ausschnitt des Spulenkörpers nach Fig. 6 entlang der Schnittlinie IX-IX in Fig. 6,
- Fig. 10: in einer Ansicht einen Lüftring für die Federdruckbremse nach den Fig. 1 und 2,
- Fig. 11: einen Schnitt durch den Lüftring nach Fig. 10 entlang der Schnittlinie XI-XI in Fig. 10 und
- Fig. 12: in einem Schnitt eine weitere Ausführungsform einer erfindungsgemäßen elektromagnetischen Federdruckbremse, die mit Lamellen versehen ist.

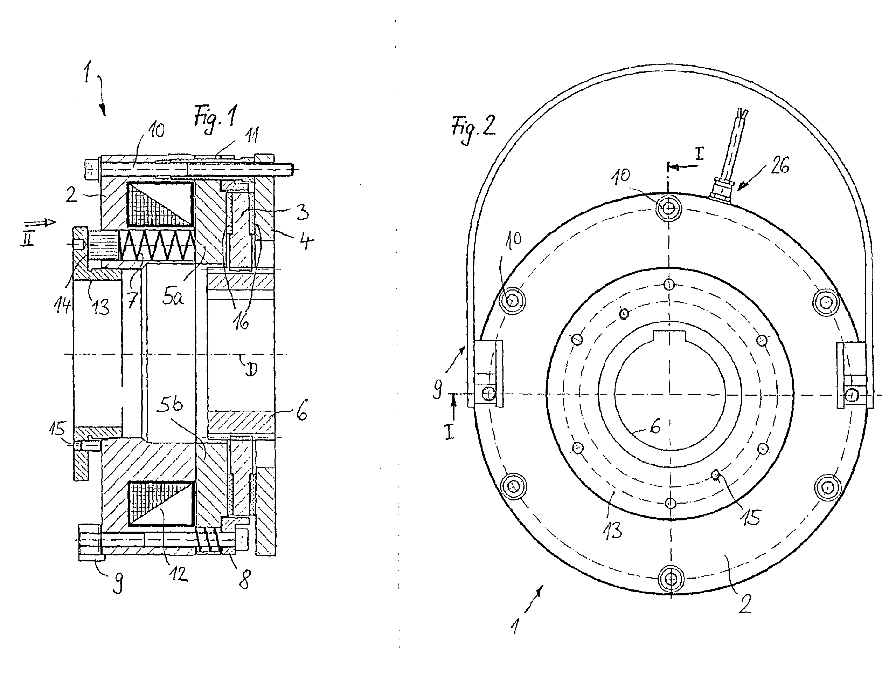

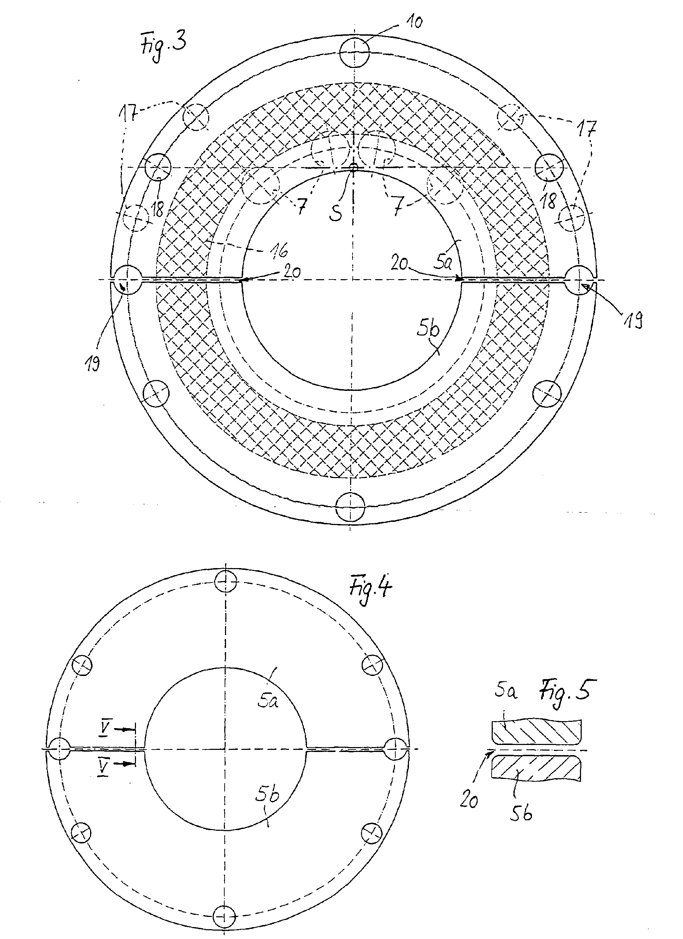

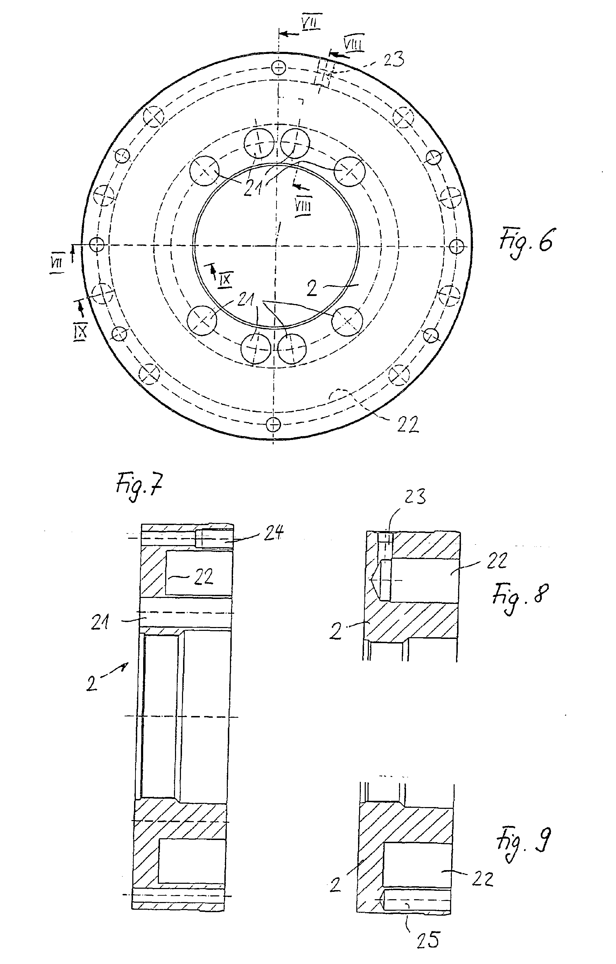

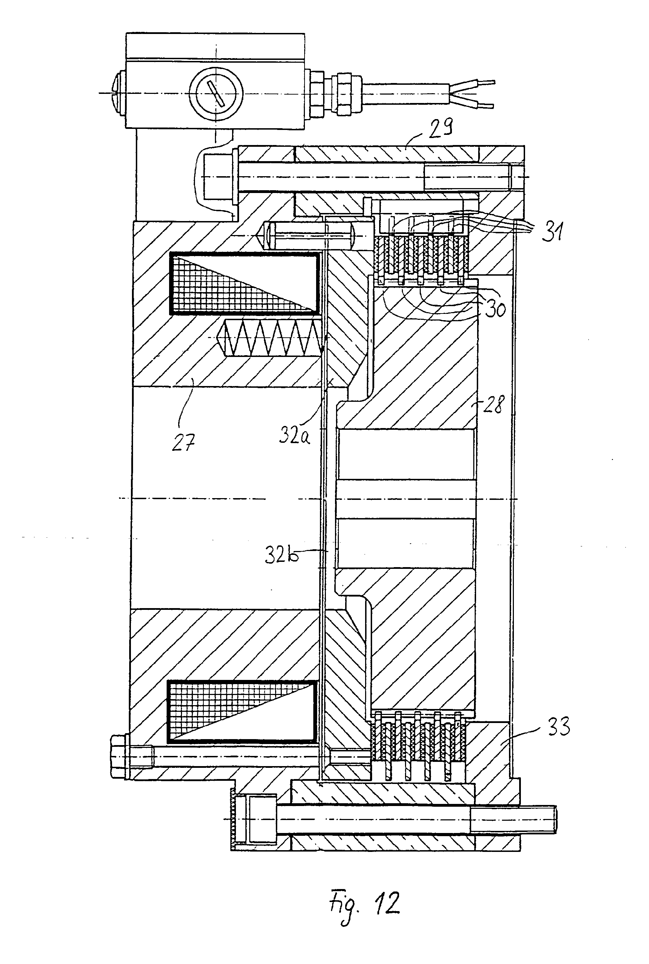

Eine elektromagnetische Federdruckbremse 1 gemäß den Fig. 1 bis 11 dient zum Abbremsen eines Personen- oder Lastenaufzugges und ist als Zweikreis-Federdruckbremse - wie nachfolgend näher beschrieben - gestaltet. Die Federdruckbremse 1 weist eine um eine Drehachse D drehbare Mitnehmernabe 6 auf, die drehschlüssig mit einem entsprechenden Antriebsglied des Personen- oder Lastenaufzuges verbindbar ist. Die Mitnehmernabe 6 ist auf ihrem Außenmantel mit einer Außenverzahnung versehen, auf der mittels einer entsprechenden Innenverzahnung ein koaxial und drehschlüssig zu der Mitnehmernabe 6 angeordneter Bremsscheibenring 3 gehalten ist. Die Verzahnung zwischen der Mitnehmernabe 6 und dem Bremsscheibenring 3 ist so gewählt, daß die beiden Bauteile relativ zueinander axial beweglich sind. Dadurch ist ein axialer Ausgleich abhängig von dem jeweiligen Antriebsglied des Personen- und Lastenaufzuges möglich. Der Bremsscheibenring 3 wird zu einer Seite axial von einem ortsfesten Bremsflansch 4 flankiert. Auf der gegenüberliegenden Seite schließt an den Bremsscheibenring 3 eine in zwei Ankerscheibenhälften 5a und 5b unterteilte Ankerscheibe an. Die beiden Ankerscheibenhälften 5a und 5b sind in Umfangsrichtung geteilt und bilden zwei voneinander unabhängige, getrennte Bauteile (Fig. 3 bis 5). Auf der dem Bremsscheibenring 3 gegenüberliegenden Seite der beiden Ankerscheibenhälften 5a und 5b ist axial an diese ein Spulenkörper 2 angeschlossen, der - wie auch die beiden Ankerscheibenhälften 5a und 5b - koaxial zur Mitnehmernabe 6 und damit zum Bremsscheibenring 3 ausgerichtet ist. Der Bremsscheibenring 3 weist auf seinen gegenüberliegenden Stirnseiten und damit sowohl den Ankerscheibenhälften 5a, 5b als auch dem Bremsflansch 4 zugewandt, zwei Reibbelagringe 16 auf.

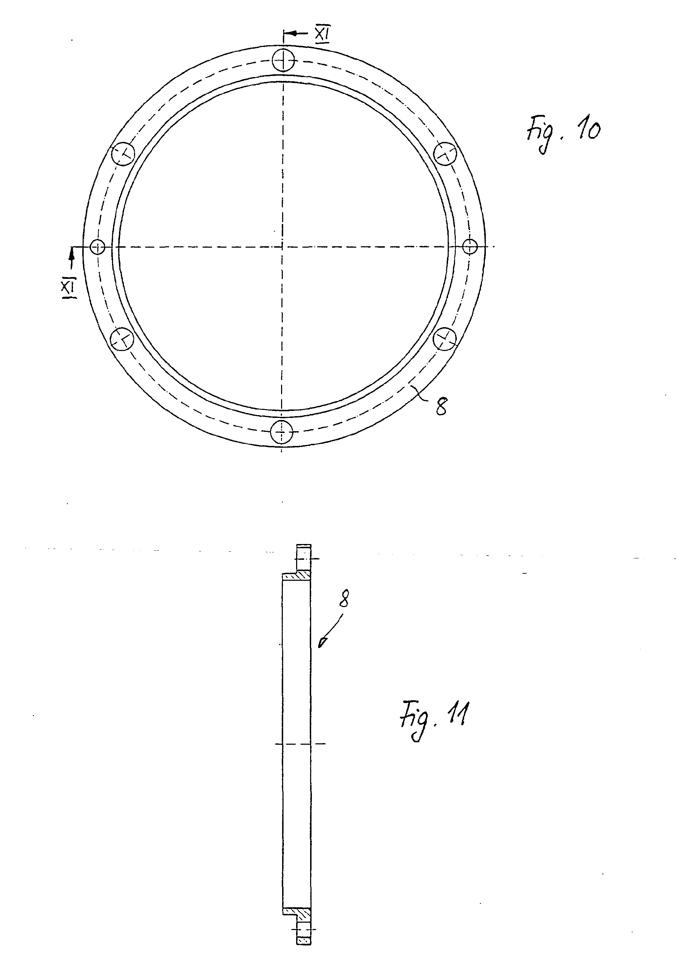

Der Spulenkörper 2 ist in an sich bekannter Weise mit einem zu den Ankerscheibenhälften 5a, 5b hin offenen Ringraum 22 (Fig. 6 und 7) versehen, in dem ein elektromagnetischer Spulenring 12 angeordnet ist. Elektrische Anschlußkabel 26 (Fig. 2) sind über eine Radialbohrung 23 (Fig. 8) in den Ringraum des Spulenkörpers 2 eingeführt. Der Spulenkörper 2 ist über Schraubverbindungen 10, 11 fest mit dem Bremsflansch 4 verbunden, wobei die Schraubverbindungen über den Umfang der Federdruckbremse 1 verteilt angeordnet sind (Fig. 2). Die Schraubverbindungen 10, 11 sind als Einstelleinrichtungen zur Einstellung des Luftspaltes zwischen dem Bremsscheibenring 3 und dem Bremsflansch 4 bzw. den Ankerscheibenhälften 5a, 5b gestaltet. Dazu sind auf die jeweiligen Verbindungsschrauben 10 Einstellhülsen 11 aufgeschraubt, deren zum Bremsflansch 4 gewandter Stirnrand jeweils die axiale Abstützung des Bremsflansches 4 übernimmt. Durch eine entsprechende Verdrehung der Einstellhülsen 11 wird die gewünschte Luftspalteinstellung erzielt.

Die beiden Ankerscheibenhälften 5a und 5b sind identisch zueinander gestaltet und sind jeweils auf zwei Führungsbolzen 18 axial verschiebbar gelagert, wobei die beiden Führungsbolzen 18 jeder Ankerscheibenhälfte 5a, 5b jeweils achsparallel zur Drehachse D verlaufen. Die beiden Ankerscheibenhälften 5a und 5b bilden gemeinsam die Form eines geschlossenen Ankerscheibenringes, der in seiner Hälfte unterteilt ist. Auch in der Praxis werden die beiden Ankerscheibenhälften 5a und 5b dadurch hergestellt, daß zunächst ein geschlossener Ankerscheibenring geschaffen wird, der anschließend exakt halbiert zerschnitten wird. Die beiden Ankerscheibenhälften 5a und 5b sind jeweils auf zwei Führungsbolzen 18 axial verschiebbar geführt, deren Führungsachsen jeweils parallel zur Drehachse D ausgerichtet sind. Die Ankerscheibenhälften 5a und 5b sind durch die Führungsbolzen 18 derart geführt, daß zwischen den einander zugewandten Rändern der beiden Ankerscheibenhälften 5a und 5b ein gleichmäßiger Spalt 20 verbleibt (Fig. 3 bis 5). Der Spalt 20 ist so groß bemessen, daß sich kein Abrieb im Spalt 20 durch die Reibbeläge 16 im Betrieb der Federdruckbremse 1 absetzen kann. Die beiden Führungsbolzen 18 jeder Ankerscheibenhälfte 5a, 5b weisen jeweils den gleichen Abstand zum Spalt 20 auf. Dabei sind die Führungsbolzen 18 derart relativ zu der jeweiligen Ankerscheibenhälfte 5a, 5b angeordnet, daß eine geometrische Verbindungslinie zwischen ihren Führungsachsen (gestrichelt dargestellt) exakt einen Flächenschwerpunkt S der jeweiligen Ankerscheibenhälfte 5a, 5b schneidet (Fig. 3).

Jeder Ankerscheibenhälfte 5a, 5b ist eine Druckfedereinheit 7, 17 zugeordnet, die aus vier eine Teileinheit bildenden inneren Schraubendruckfedern 7 sowie aus vier schwächer ausgelegten äußeren Schraubendruckfedern 17 zusammengesetzt ist. Die inneren Schraubendruckfedern 7 sind in Axialbohrungen 21 im Spulenkörper 2 angeordnet. Die äußeren Schraubendruckfedern 17 sind in Sackbohrungen 25 des Spulenkörpers 2 radial außerhalb zu den inneren Schraubendruckfedern 7 angeordnet. Die vier inneren Schraubendruckfedern 7 sind gemäß Fig. 3 derart relativ zu der jeweiligen Ankerscheibenhälfte 5a, 5b im Spulenkörper 2 positioniert, daß sie einen gemeinsamen Druckschwerpunkt aufweisen, der exakt mit dem Flächenschwerpunkt S der jeweiligen Ankerscheibenhälfte 5a, 5b übereinstimmt. Auch die vier äußeren Schraubendruckfedern 17 sind derart im Spulenkörper 2 relativ zu der jeweiligen Ankerscheibenhälfte 5a, 5b positioniert, daß sie einen gemeinsamen Druckschwerpunkt aufweisen, der exakt in dem Flächenschwerpunkt S der jeweiligen Ankerscheibenhälfte 5a, 5b liegt.

Die Druckfederkraft der inneren Schraubendruckfeder 7 ist einstellbar, wodurch das Bremsmoment für die Bremsscheibe 3 eingestellt werden kann. Dazu stützen sich die inneren Schraubendruckfedern 7 auf ihrer der jeweils zugeordneten Ankerscheibenhälfte 5a, 5b gegenüberliegenden Stirnseite an jeweils einem Stützbolzen 14 ab, der in der jeweiligen Bohrung 21 des Spulenkörpers 2 axial gleitbeweglich angeordnet ist. Auf die Stützbolzen 14 wirkt ein Ringflansch eines Einstellringes 13, der koaxial zum Spulenkörper 2 in diesen eingeschraubt ist. Dazu ist am Innenumfang des ringförmigen Spulenkörpers 2 ein Innengewinde vorgesehen und am Einstellring 13 ist ein korrespondierendes Außengewinde angeordnet. Dem Einstellring 13 sind zudem mehrere Sicherungsstifte 15 zugeordnet, die als Schraubbolzen gestaltet sind und sich stirnseitig gegen den Spulenkörper 2 pressen, wodurch die jeweils eingestellte Position des Einstellringes 13 fixiert ist.

Um eine Handbelüftung der Federdruckbremse 1 zu ermöglichen, ist eine Handhebeleinrichtung 9 vorgesehen, die über zwei einander diametral gegenüberliegende Bolzenverbindungen einen Lüftring 8 axial bewegt. Der Lüftring 8 (Fig. 1, 10 und 11) umschließt den Bremsscheibenring 3 radial außen koaxial zur Drehachse D und weist ein L-förmiges Profil auf. Der Lüftring 8 ist axial in eine entsprechende Abstufung jeder Ankerscheibenhälfte 5a und 5b eingesetzt, wodurch sich eine platzsparende Anordnung des Lüftringes 8 ergibt. Der Lüftring 8 ist über die zwei Führungshülsen 11 (Fig. 1), die auf diametral gegenüberliegenden Seiten der Federdruckbremse 1 angeordnet sind, axial geführt, wobei die Führungen für den Lüftring um jeweils 90° zu den Betätigungsbolzen zur axialen Verschiebung des Lüftringes 8 in Umfangsrichtung versetzt sind. Die beiden Betätigungsbolzen der Betätigungseinrichtung 9 (Fig. 1 unten) ragen gemäß Fig. 3 auf Höhe der Aussparungen 19 axial durch den Spulenkörper 2 sowie die beiden Ankerscheibenhälften 5a, 5b hindurch und greifen auf Höhe des Spaltes 20 an dem Lüftring 8 an. Jedem Betätigungsbolzen ist eine nicht näher bezeichnete Druckfeder (Fig. 1) zugeordnet, die den Lüftring 8 in seiner die Ankerscheibenhälften 5a und 5b axial freigebenden Position halten. Auf der dem Lüftring 8 gegenüberliegenden axialen Stirnseite des Spulenkörpers 2 sind mit den Betätigungsbolzen der Betätigungseinrichtung 9 zwei Betätigungsblöcke starr verbunden, von denen aus radial ein beide Betätigungsblöcke übergreifender Betätigungsbügel (Fig. 2) abragt. Der Betätigungsbügel ist mit den Betätigungsblöcken ebenfalls starr verbunden. Ein axiales Ziehen oder Drücken des Betätigungsbügels bewirkt somit eine manuelle Lüftung der Ankerscheibenhälften 5a und 5b.

Im normalen Betrieb der elektromagnetischen Federdruckbremse 1 werden die beiden Ankerscheibenhälften 5a und 5b über ihre beiden, jeweils voneinander unabhängigen Druckfedereinheiten 7, 17 gegen den Bremsscheibenring 3 gepreßt, wodurch dieser zusätzlich axial gegen den ortsfesten Bremsflansch 4 gedrückt wird, so daß beide Reibbelagringe 16 wirksam werden. Die Einstellung des Bremsmomentes erfolgt - wie zuvor beschrieben - über die innere Druckfederteileinheit 7 und die entsprechende Einstelleinrichtung 13, 14, 15. Sobald die elektromagnetische Spule 12 durch einen entsprechenden elektrischen Schaltvorgang anzieht, werden die beiden Ankerscheibenhälften 5a und 5b gleichzeitig axial gegen den Spulenkörper 2 gezogen, wodurch der Bremsscheibenring 3 freigegeben wird. Eine entsprechende Stromlosschaltung der elektromagnetischen Spule 12 bringt anschließend wieder die Druckfedereinheiten 7, 17 der beiden Ankerscheibenhälften 5a und 5b zur Wirkung, so daß die Ankerscheibenhälften 5a und 5b wieder gegen den Bremsscheibenring 3 gedrückt werden.

Die Federdruckbremse gemäß der Fig. 12 ist als Lamellenbremse gestaltet, indem als Bremsscheibenanordnung eine Lamellenscheibenanordnung 30, 31 vorgesehen ist. Die Federdruckbremse weist in an sich bekannter Weise einen Spulenkörper 27 einschließlich eines Außenkörpers 29 auf. Auf der dem Spulenkörper 27 gegenüberliegenden Seite ist der Außenkörper 29 mit einer Reibscheibe 33 fest verbunden. Spulenkörper 27, Außenkörper 29 und Reibscheibe 33 bilden den feststehenden Bremsenkörper. Koaxial innerhalb des Bremsenkörpers ist eine Nabe 28 drehbeweglich angeordnet, die an einem zu bremsenden Antrieb angeflanscht wird. Zwischen dem Außenkörper 29 und der Nabe 28 ist die Lamellenscheibenanordnung 30, 31 positioniert. Die Lamellenscheibenanordnung 30, 31 weist in an sich bekannter Weise insgesamt fünf Innenlamellenscheiben 30 auf, die jeweils auf gegenüberliegenden Axialseiten mit einem Reibbelag versehen sind. Zwischen den Innenlamellenscheiben 30 sind Außenlamellenringe 31 positioniert, die mittels entsprechender, nicht näher bezeichneter Halteblöcke drehfest am Außenkörper 29 gehalten sind. Die Innenlamellenscheiben 30 sind drehschlüssig mittels entsprechender Nuten und Stege auf der Nabe 28 gehalten. Sowohl die Innenlamellenscheiben 30 als auch die Außenlamellenringe 31 sind axial beweglich angeordnet.

Die so gebildete Bremsscheibenanordnung ist durch eine Ankerscheibenanordnung 32a, 32b beaufschlagbar, die aus zwei Ankerscheibenhälften 32a und 32b zusammengesetzt ist. Die Lagerung und Druckbeaufschlagung der Ankerscheibenhälften ist identisch zu den Ankerscheibenhälften 5a und 5b gemäß den Fig. 1 und 3 bis 5, so daß für nähere Erläuterungen auf das Ausführungsbeispiel nach den Fig. 1 bis 11 verwiesen werden kann. Einziger Unterschied ist somit bei der Federdruckbremse nach Fig. 12, daß die Ankerscheibenhälften 32a und 32b keine einstückige Bremsscheibe gemäß dem Ausführungsbeispiel nach den Fig. 1 bis 11, sondern vielmehr eine Bremsscheibenanordnung in Form einer Lamellenscheibenanordnung 30, 31 beaufschlagen, die axial gegen die feststehende Reibscheibe 33 sowie gegeneinander drückbar sind.

## Patentansprüche

1. Elektromagnetische Zweikreis-Federdruckbremse mit einer drehbaren Bremsscheibenanordnung sowie mit einer der Bremsscheibenanordnung axial zugeordneten Ankerscheibenanordnung, die in einer Axialrichtung für einen Kraftschluss mit der Bremsscheibenanordnung durch eine Druckfederanordnung und in der entgegengesetzten Axialrichtung durch eine elektromagnetische Spule beaufschlagbar ist,
**dadurch gekennzeichnet, dass**
die Ankerscheibenanordnung in Umfangsrichtung in zwei in einer gemeinsamen Ebene angeordnete, identisch zueinander gestaltete Ankerscheibenhälften (5a, 5b) unterteilt ist, die unabhängig von einander axial geführt sind, und dass die Druckfederanordnung in zwei Druckfedereinheiten (7, 17) aufgeteilt ist, die jeweils gleiche Druckkräfte aufbringen und die jeweils einer Ankerscheibenhälfte (5a, 5b) zugeordnet sind.

2. Elektromagnetische Federdruckbremse nach Anspruch 1, **dadurch gekennzeichnet, daß** die Druckfedereinheit (7, 17) bezüglich der zugeordneten Ankerscheibenhälfte (5a, 5b) derart angeordnet ist, daß ihr Druckschwerpunkt mit einem Flächenschwerpunkt (S) der Ankerscheibenhälfte (5a, 5b) übereinstimmt.

3. Elektromagnetische Federdruckbremse nach Anspruch 2, **dadurch gekennzeichnet, daß** die axiale Führung jeder Ankerscheibenhälfte (5a, 5b) durch jeweils zwei zueinander parallele Linearführungen (18) gestaltet ist, deren gemeinsame geometrische Schnittlinie ihrer Führungsachsen den Flächenschwerpunkt (S) der zugeordneten Ankerscheibenhälfte (5a, 5b) schneidet.

4. Elektromagnetische Federdruckbremse nach einem der vorhergehenden Ansprüche, **dadurch gekennzeichnet, daß** jede Druckfedereinheit (7, 17) eine Druckfederteileinheit (7) aufweist, die durch ein Stellelement (13) für eine Bremsmomenteinstellung der Bremsscheibe (3) belastet ist, wobei die Druckfederteileinheit (7) den identischen Druckschwerpunkt wie die gesamte Druckfedereinheit (7, 17) aufweist.

5. Elektromagnetische Federdruckbremse nach einem der vorhergehenden Ansprüche, **dadurch gekennzeichnet, daß** ein zu den Ankerscheibenhälften (5a,5b) koaxial angeordneter Lüftring (8) vorgesehen ist, der für eine gleichzeitige Lüftung der beiden Ankerscheibenhälften (5a, 5b) mittels einer Handbetätigung (9) axial beweglich ist.

## Claims

1. Electromagnetic dual-circuit spring brake with a rotatable brake disk arrangement and with an armature disk arrangement axially associated with the brake disk arrangement and operable in one axial direction by a compression spring for a non-positive connection to the brake disk arrangement and in the opposite axial direction by an electromagnetic coil,
**characterized in that**
the armature disk arrangement is divided in the peripheral direction into two armature disk halves (5a, 5b) designed identically to one another, arranged in a common plane and axially guided independently of one another, and **in that** the compression spring arrangement is divided into two compression spring units (7, 17) that each exert identical compression forces and are each associated with one armature disk half (5a, 5b).

2. Electromagnetic spring brake according to Claim 1, **characterized in that** the compression spring unit (7, 17) is arranged in relation to the associated armature disk half (5a, 5b) such that its center of pressure matches a center of area (S) of the armature disk half (5a, 5b).

3. Electromagnetic spring brake according to Claim 1 or 2, **characterized in that** the axial guide of each armature disk half (5a, 5b) is designed with two parallel linear guides (18) whose common geometric line of intersection of their guide axes intersects the center of area (S) of the associated armature disk half (5a, 5b).

4. Electromagnetic spring brake according to one of the preceding claims, **characterized in that** each compression spring unit (7, 17) has a compression spring part-unit (7) that is subjected to load by a setting element (13) for setting the torque of the brake disk (3), where the compression spring part-unit (7) has a center of pressure identical to the entire compression spring unit (7, 17).

5. Electromagnetic spring brake according to one of the preceding claims, **characterized in that** a release ring (8) arranged coaxially to the armature disk halves (5a, 5b) is provided that is axially movable for simultaneous release of the two armature disk halves (5a, 5b) by means of a manual control (9).

## Revendications

1. Frein électromagnétique à ressorts et à double circuit, comprenant un dispositif de disques de frein rotatif ainsi qu'un dispositif de disques d'induit monté axialement par rapport au dispositif de disques de frein, qui est actionné dans un sens axial par un système de ressorts de pression pour réaliser une connexion par friction avec le dispositif de disques de frein, et dans le sens axial opposé, par une bobine électromagnétique,
**caractérisé en ce**
**que** le dispositif de disques d'induit est divisé dans le sens circonférentiel en deux demi- disques d'induit (5a, 5b) identiques, situés dans un plan commun, qui sont guidés indépendamment l'un de l'autre dans le sens axial, et en ce que le système de ressorts de pression est divisé en deux unités de ressorts de pression (7, 17) qui fournissent chacune la même force de compression et sont chacune associées à un demi-disque d'induit (5a, 5b).

2. Frein électromagnétique à ressorts selon la revendication 1, **caractérisé en ce que** l'unité de ressorts de pression (7, 17) est disposée par rapport au demi-disque d'induit (5a, 5b) de telle sorte que son centre de pression correspond à un point centroïde (S) du demi- disque d'induit (5a, 5b).

3. Frein électromagnétique à ressorts selon la revendication 2, **caractérisé en ce que** le guide axial de chaque demi-disque d'induit (5a, 5b) est constitué de deux guides linéaires parallèles dont la ligne géométrique reliant leurs axes passe par le point centroïde (S) du demi-disque d'induit (5a, 5b) associé.

4. Frein électromagnétique à ressorts selon l'une des revendications précédentes, **caractérisé en ce que** chaque unité de ressorts de pression (7, 17) présente une sous-unité de ressorts de pression (7) qui est sollicitée par un élément de réglage (13) permettant un réglage du couple de freinage du disque de frein (3), sachant que la sous-unité de ressorts de pression (7) a le même centre de pression que l'unité de ressorts de pression entière (7, 17).

5. Frein électromagnétique à ressorts selon l'une des revendications précédentes, **caractérisé en ce qu'**est prévu un anneau de déblocage (8) disposé coaxialement par rapport aux demi-disques d'induit (5a, 5b) et mobile axialement au moyen d'une poignée pour débloquer simultanément les deux demi-disques d'induit (5a, 5b).
